# EUROPEAN PATENT APPLICATION

(11) **EP 4 815 077 A1**
(43) Date of publication of application: **30.09.2026**
(21) Application number: 25166215.1
(22) Date of filing: 26.03.2025
(51) Int. Cl.: H01M 8/248

(54) **VARIABLE CONTACT PRESSURE FOR ELECTROCHEMICAL ENERGY CONVERSION SYSTEMS**

(71) Applicant: Siemens Energy Global GmbH & Co. KG, 81739 München (DE)
(72) Inventor: Satheesh, Abhiroop, 91341 Röttenbach (DE)

(57) **Abstract**

The invention is about an electrochemical energy conversion system (1), with electrochemical cells (2), each electrochemical cell (2) comprising a membrane electrode assembly (3) arranged between a cathodic gas diffusion layer (4) and an anodic gas diffusion layer (5) and on front sides (6) surrounded by a frame (7) and enclosed between bipolar plates (8), the electrochemical cells (2) being compressed between first and second end plates (9, 10) by means of tie rods (11), wherein a pressure unit (12) is arranged between the second end plate (10) and a third end plate (13) opposite the first end plate (9) in relation to the second end plate (10), the pressure unit (12) comprising a piston (14) that acts on the electrochemical cells (2) through an opening (15) in the second end plate (10) and the directly neighbouring bipolar plate (8), the piston (14) having an attachment (16) for different pressure profiles.

## Description

### TECHNICAL FIELD

The invention is about an electrochemical energy conversion system.

### BACKGROUND

Electrochemical energy conversion systems are innovative technologies that convert chemical energy into electrical energy and vice versa through electrochemical reactions. These systems play a crucial role in various applications, including energy storage, fuel cells, and electrolysers.

The core component of these systems is the electrochemical cell, which typically consists of a membrane electrode assembly (MEA) sandwiched between a cathodic gas diffusion layer and an anodic gas diffusion layer and enclosed between bipolar plates. Several cells are stacked together between end plates using tie rods.

These systems are essential for the development of sustainable energy solutions, as they enable efficient energy conversion and storage, contributing to the reduction of greenhouse gas emissions and the advancement of renewable energy technologies.

### SUMMARY OF INVENTION

One of the problems with electrochemical energy conversion systems is the need for uniform MEA-GDL contact pressure on the electrochemical cells. Uneven pressure can lead to inadequate performance and a shortened lifespan of the electrochemical cells.

The object of the invention is to provide an electrochemical energy conversion system in which a contact pressure distribution can be adjusted.

The task directed to an electrochemical energy conversion system is solved by an electrochemical energy conversion system, with electrochemical cells, each cell comprising a membrane electrode assembly arranged between a cathodic gas diffusion layer and an anodic gas diffusion layer and on front sides surrounded by a frame and enclosed between bipolar plates, the electrochemical cells being compressed between first and second end plates by means of tie rods, wherein a pressure unit is arranged between the second end plate and a third end plate opposite the first end plate in relation to the second end plate, the pressure unit comprising a piston that acts on the electrochemical cells through an opening in the second end plate and the directly neighbouring bipolar plate, the piston having an attachment for different pressure profiles.

The major advantage of this system lies in its cost-effective design: Only the attachment needs to be adapted to accommodate different pressure distributions. This means that extensive modifications to the entire structure are not required, saving both time and costs. By simply adjusting the attachment, the system can flexibly respond to various requirements without the need for a complete redesign. This makes the system not only economical but also adaptable and versatile in its applications.

In an advantageous embodiment of the invention the pressure unit comprises a load cell attached to the third end plate. The advantage is that it allows for precise measurement and control of the contact pressure applied to the electrochemical cells. This ensures uniform pressure distribution, which is crucial for the optimal performance and longevity of the cells. By accurately monitoring the contact pressure, the system can make necessary adjustments to maintain the desired pressure profile, thereby enhancing the efficiency and reliability of the electrochemical energy conversion system.

In a further advantageous embodiment of the invention, the attachment and the piston have corresponding form-locking features, so that misalignment of the attachment during assembly can be avoided.

In yet another advantageous embodiment of the invention the pressure unit comprises a screw unit having a central body arranged between a left-hand threaded rod and a right-hand threaded rod arranged on the piston on the opposite side to the attachment, the central body having respective internally threaded holes. When the central body is rotated, it causes the two rods to move away from or towards the central body due to the opposite threads. In this way, the pressure on electrochemical cells can be adjusted safely and reliably.

It is preferable, when the tie rods are secured using disc springs. The advantage of using disc springs in this context is that they help secure the tie rods, ensuring a stable and reliable pressure distribution on the electrochemical cells. Disc springs provide a consistent and adjustable force, which is crucial for maintaining the optimal performance and longevity of the cells. By using disc springs, the system can better accommodate variations in pressure and ensure that the cells are compressed uniformly, enhancing the overall efficiency and reliability of the electrochemical energy conversion system.

It is just as preferable, when the frame is made of a compressible material, such as plastic polymer, because this allows for better accommodation of pressure variations within the electrochemical energy conversion system. A compressible frame can help ensure a more uniform pressure distribution across the cells, which is crucial for maintaining optimal performance and longevity of the cells.

### BRIEF DESCRIPTION OF DRAWINGS

**FIG 1** shows a single electrochemical cell schematic diagram according to the state of the art,
**FIG 2** shows an electrochemical cell design according to the invention,
**FIG 3** shows a screw unit,
**FIG 4** shows a piston with attachment according to the invention,
**FIG 5** shows a piston according to the invention with the attachment removed showing form-locking features and
**FIGs 6 to 9** show attachments with different pressure profiles.

### DESCRIPTION OF EMBODIMENTS

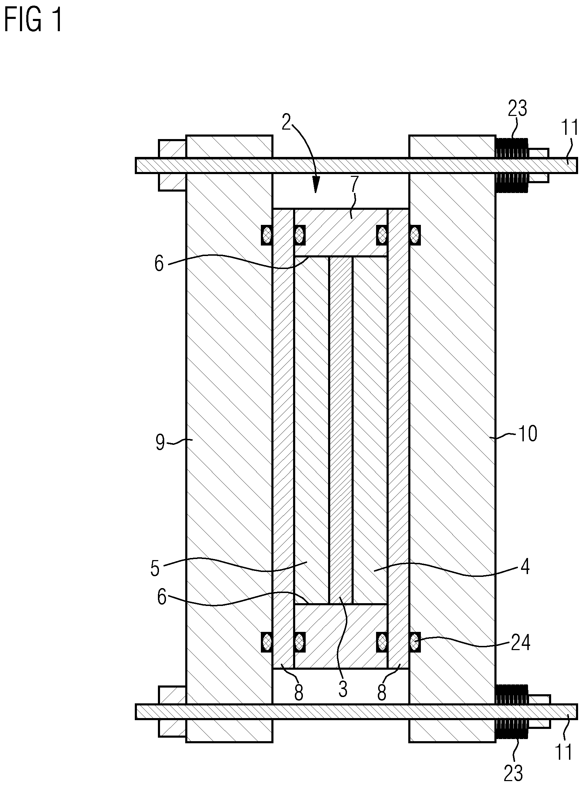

In **FIG 1** an exemplary embodiment of a prior art electrochemical cell 2 is shown. It comprises a membrane electrode assembly 3 arranged between a cathodic gas diffusion layer 4 and an anodic gas diffusion layer 5 which on front sides 6 are surrounded by a frame 7 and enclosed between bipolar plates 8. The electrochemical cells 2 is compressed between first and second end plates 9, 10 by means of tie rods 11 secured by disc springs 23 and nuts. Seals 24 ensure that no liquids or gases escape from the cell 2 and that a certain contact pressure is maintained within the cell 2.

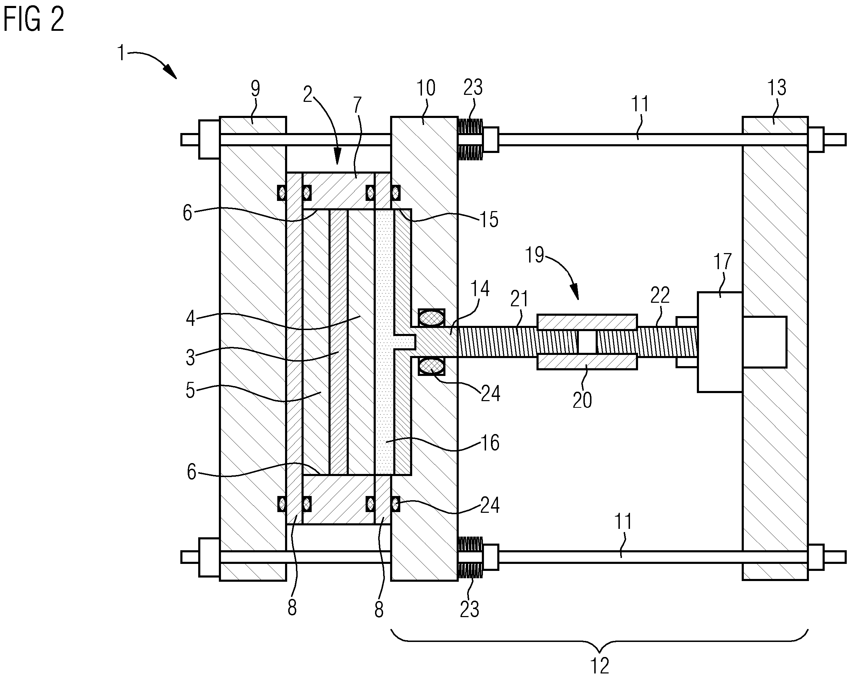

**FIG 2** shows an electrochemical energy conversion system 1 according to the invention. A pressure unit 12 is arranged between the second end plate 10 and a third end plate 13 opposite the first end plate 9 in relation to the second end plate 10. The pressure unit 12 comprises a piston 14 that acts on the electrochemical cell 2 through an opening 15 in the second end plate 10 and the directly neighbouring bipolar plate 8. According to the invention, the piston 14 has an attachment 16 for different pressure profiles.

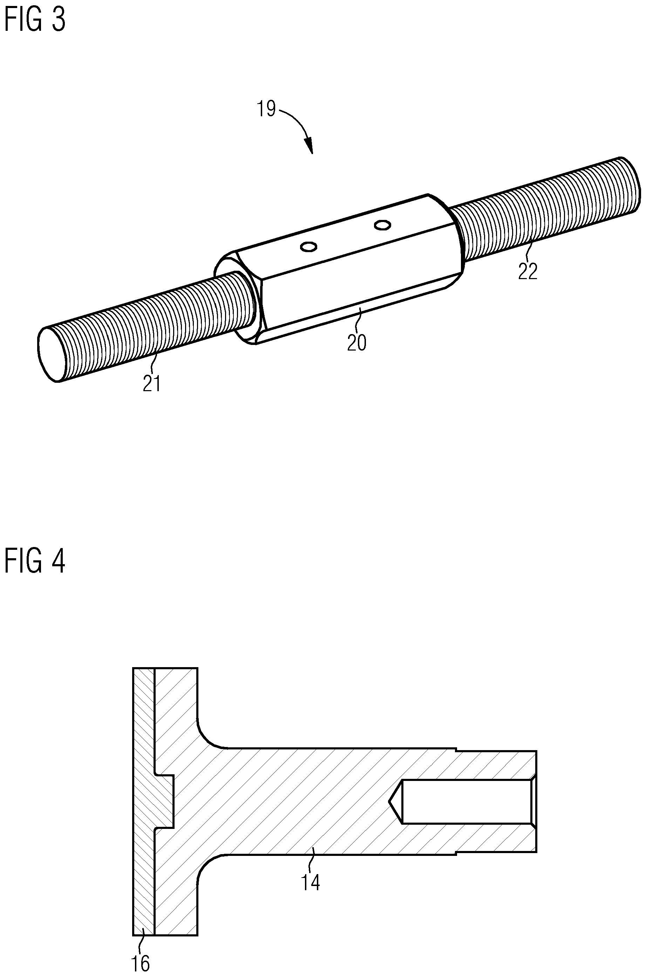

Further, **FIG 2** shows a screw unit 19, which is a part of the pressure unit 12. The screw unit 19 is shown in more Detail in **FIG 3****.** The movement of the piston 14 is enabled by the screw unit 19 using components like a rotatable, hexagonal central body 20, a left-handed thread 21 and a right-handed thread 22. The outer shape of the central body 20 is not restricted to a hexagon. The hexagonal shape of the design shown in **FIG 3** is intended for the flexible operation using standard spanners or wrenches.

As can be seen from **FIG 2** the pressure unit 12 comprises a load cell 17 attached to the third end plate 13.

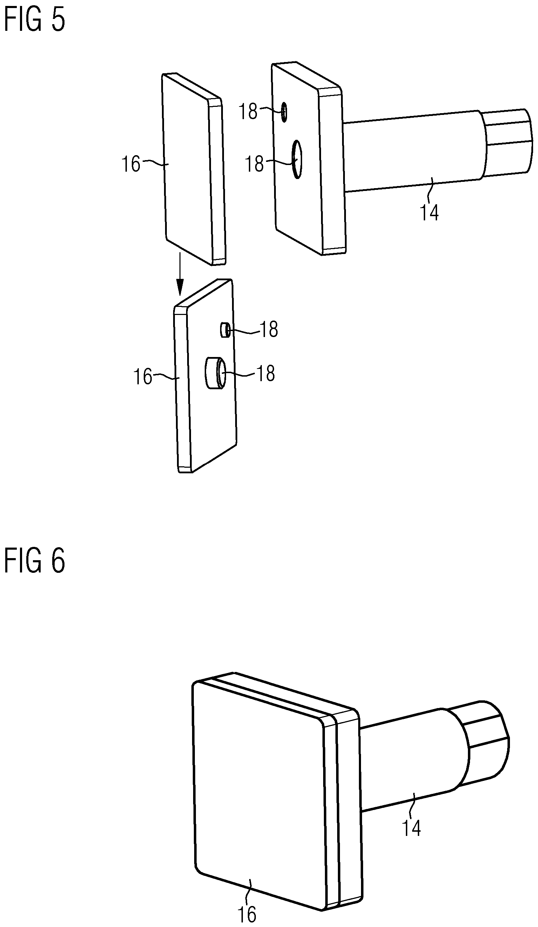

**FIG 4** shows the piston 14 with the attachment 16 and **FIG 5** shows the attachment design, wherein the attachment 16 and the piston 14 have corresponding form-locking features 18 such that any misalignment of the attachment 16 can be avoided during the assembly process.

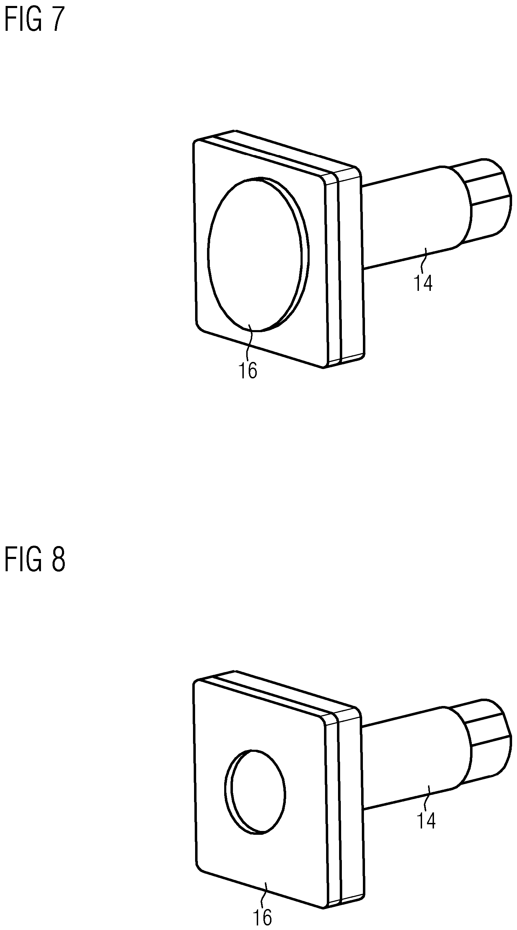

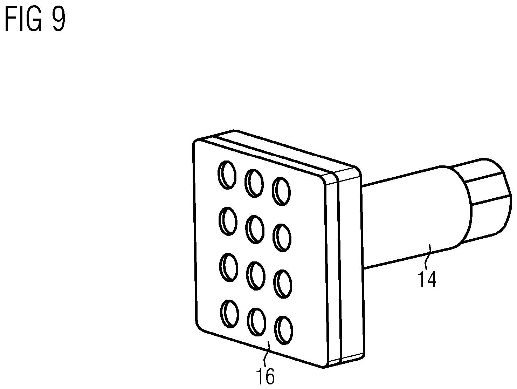

**FIGs 6 to 9** show attachments 16 with different pressure profiles. **FIG 6** shows an attachment 16 with a uniform profile. **FIG 7** shows a profile for essentially uniform pressure except for the corners. **FIG 8** shows a profile with lower pressure in the centre and **FIG 9** shows a profile with circular pattern.

### REFERENCE SIGNS LIST

- 1: electrochemical energy conversion system
- 2: electrochemical cell
- 3: membrane electrode assembly
- 4: cathodic gas diffusion layer
- 5: anodic gas diffusion layer
- 6: front side
- 7: frame
- 8: bipolar plate
- 9: first end plate
- 10: second end plate
- 11: tie rod
- 12: pressure unit
- 13: third end plate
- 14: piston
- 15: opening in the second end plate
- 16: attachment
- 17: load cell
- 18: form-locking feature
- 19: screw unit
- 20: central body
- 21: left-hand threaded rod
- 22: right-hand threaded rod
- 23: disc spring
- 24: seal

## Claims

1. An electrochemical energy conversion system (1), with electrochemical cells (2), each electrochemical cell (2) comprising a membrane electrode assembly (3) arranged between a cathodic gas diffusion layer (4) and an anodic gas diffusion layer (5) and on front sides (6) surrounded by a frame (7) and enclosed between bipolar plates (8), the electrochemical cells (2) being compressed between first and second end plates (9, 10) by means of tie rods (11), **characterized in that** a pressure unit (12) is arranged between the second end plate (10) and a third end plate (13) opposite the first end plate (9) in relation to the second end plate (10), the pressure unit (12) comprising a piston (14) that acts on the electrochemical cells (2) through an opening (15) in the second end plate (10) and the directly neighbouring bipolar plate (8), the piston (14) having an attachment (16) for different pressure profiles.

2. The electrochemical energy conversion system (1) according to claim 1, wherein the pressure unit (12) comprises a load cell (17) attached to the third end plate (13).

3. The electrochemical energy conversion system (1) according to claim 1 or claim 2, wherein the attachment (16) and the piston (14) have corresponding form-locking features (18).

4. The electrochemical energy conversion system (1) according to one of the preceding claims, wherein the pressure unit (12) comprises a screw unit (19) having a central body (20) arranged between a left-hand threaded rod (21) and a right-hand threaded rod (22) arranged on the piston (14) on the opposite side to the attachment (16), the central body (20) having respective internally threaded holes.

5. The electrochemical energy conversion system (1) according to one of the preceding claims, wherein the tie rods (11) are secured using disc springs (23).

6. The electrochemical energy conversion system (1) according to one of the preceding claims, wherein the frame (7) is made of a compressible material, such as plastic polymer.
